# EUROPÄISCHE PATENTSCHRIFT

(11) **EP 0 598 808 B1**
(45) Veröffentlichungstag und Bekanntmachung des Hinweises auf die Patenterteilung: **25.10.1995**
(21) Anmeldenummer: 92917682.4
(22) Anmeldetag: 21.08.1992
(51) Int. Cl.: F16D 65/16, F16D 55/02, F16J 3/04, F16J 15/52

(54) **SCHUTZKAPPE FÜR DEN BREMSZYLINDER EINER SCHEIBENBREMSE**
PROTECTING CAP FOR THE CYLINDER OF A DISK BRAKE
COUVERCLE PROTECTEUR DU CYLINDRE D'UN FREIN A DISQUE

(30) Priorität: 22.08.1991 DE 4127830
(43) Veröffentlichungstag der Anmeldung: 01.06.1994
(73) Patentinhaber: ITT Automotive Europe GmbH, 60488 Frankfurt am Main (DE)
(72) Erfinder: WEILER, Rolf, D-6239 Eppstein 2 (DE); BACH, Uwe, D-6272 Niedernhausen-Oberjosbach (DE); LENZNER, Horst, D-6467 Schattorf (DE)
(86) Internationale Anmeldenummer: EP9201921
(87) Internationale Veröffentlichungsnummer: WO9304297

(56) Entgegenhaltungen:
- DE-A- 2 904 363
- DE-A- 3 243 851
- DE-C- 2 635 513
- DE-C- 3 111 576
- GB-A- 695 408
- US-A- 2 249 141

## Beschreibung

Die Erfindung betrifft eine Schutzkappe für den Bremszylinder einer Scheibenbremse gemäß dem Oberbegriff des Patentanspruchs 1.

Eine Schutzkappe der angegebenen Art ist aus der EP-A 0 366 505 bekannt. Bei dieser bekannten Schutzkappe ist die Versteifungseinlage vollständig in das elastomere Material des Balges eingebettet und durch Vulkanisieren mit dem elastomeren Material verbunden. Dies bedingt ein vergleichsweise teures Herstellverfahren und erschwert eine automatische Montage der Schutzkappe, da das Montagewerkzeug nicht unmittelbar an dem Versteifungselement abgestützt werden kann.

Aus der DE-A-2 904 363 ist eine Schutzkappe gemäß dem Oberbegriff des Patentanspruchs 1 bekannt, bei der ein Verstärkungsring in eine ringförmige Tasche in dem einen Ende der Schutzkappe eingelegt ist. Obwohl zwischen dem Ring und der Schutzkappe eine adhäsive Verbindung besteht, kann es trotzdem, insbesondere bei der Montage der Schutzkappe vorkommen, daß der Ring von der Schutzkappe gelöst wird und aus der Tasche herausrutscht.

Der Erfindung liegt die Aufgabe zugrunde, eine Schutzkappe der eingangs genannten Art zu schaffen, die sich auf besonders kostengünstige Weise herstellen läßt und für eine automatische Montage geeignet ist.

Diese Aufgabe wird erfindungsgemäß dadurch gelöst, daß der Ring innerhalb der Tasche Perforationen aufweist, die von dem Material des Balgs durchdrungen sind.

Bei der erfindungsgemäßen Schutzkappe wird auf eine adhäsive Verbindung zwischen dem elastomeren Material des Balgs und dem eingelegten Ring verzichtet. Stattdessen wird durch das Eindringen des Materials des Balgs in die Perforationen des Rings ein Formschluß geschaffen, der beide Bauteile fest miteinander verbindet. Hierdurch kann der Ring ohne das Erfordernis besonderer Maßnahmen zur Erzeugung einer Adhäsion mit dem Balgmaterial umspritzt werden, wodurch eine erhebliche Verbilligung der Herstellung erreicht werden kann. Weiterhin können die Werkstoffe von Ring und Balg ohne Berücksichtigung ihres Adhäsionsverhaltens ausgewählt werden. So kann der Ring aus rostfreiem Stahl oder aus thermoplastischem Kunststoff bestehen. Für die Herstellung des Balges kommen neben gummiartigen Werkstoffen auch elastomere Kunststoffe in Betracht. Durch die Ausbildung eines Tasche zur Aufnahme des Rings ist eine gute Abdichtung zwischen dem zweiten Ende des Balgs und dem Bremszylinder gewährleistet, da auf diese Weise die Wand des Balgs von der Einspannstelle zwischen dem Ring und der Innenwand der Ausnehmung des Bremszylinders bis zu dem Befestigungswulst, der den Kolben umspannt, nicht unterbrochen ist. Eine dichte Verbindung durch Verkleben des eingelegten Rings mit dem Material des Balgs ist daher nicht erforderlich. Zur Verbesserung der Abdichtung kann zusätzlich vorgesehen sein, daß die an der Wand der Ausnehmung des Bremszylinders anliegende Außenfläche der ringförmigen Tasche einen Dichtwulst oder eine Dichtlippe aufweist.

Der aus der Tasche hervorstehende Rand des Rings ermöglicht die Aufnahme und starre Abstützung der Schutzkappe in einem Montagewerkzeug, so daß die Schutzkappe automatisch montiert werden kann. Die erforderliche Einpreßkraft wird dabei durch den Formschluß zwischen dem Ring und dem Balg übertragen. Die Begrenzung des Einpreßhubs kann bei der Montage entweder am Montagewerkzeug erfolgen oder der aus der Tasche hervorstehende Rand des Ringes kann einen radialen Kragen haben, der in axialer Richtung an eine Anschlagfläche am Bremszylinder andrückbar ist. Auch die Aufnahme in einem Montagewerkzeug wird durch einen radialen Kragen erleichtert.

Bei einer anderen Ausgestaltung der erfindungsgemäßen Schutzkappe kann der aus der Tasche hervorstehende Rand des Rings mit einer Wand der Ausnehmung im Bremszylinder in Eingriff treten, um durch unmittelbaren Reibkontakt mit dem Bremszylinder das zweite Ende des Balges am Bremszylinder zu befestigen. Hierbei kann der Rand des Rings radial umgebogen und durch in einem Abstand voneinander angeordnete Ausschnitte unterbrochen sein, um die Elastizität des Randes zu erhöhen. Die dem Balg abgekehrte Wand der Tasche weist einen radial und einen axial an die Wand der Ausnehmung anlegbaren Dichtwulst bzw. eine solche Dichtlippe auf.

Ein bevorzugtes Verfahren zur Herstellung der erfindungsgemäßen Schutzkappe besteht nach einem Vorschlag der Erfindung darin, daß der Ring in einer Spritzform für die Ausformung des Balges mit dem elastomeren Material umspritzt wird. Die Tasche wird dabei unmittelbar durch das Vorhandensein des Rings in der Spritzform erzeugt.

Die Erfindung wird nachfolgend anhand von Ausführungsbeispielen näher erläutert, die in der Zeichnung dargestellt sind. Es zeigen
- Figur 1: einen Querschnitt durch den mit einer ersten Ausführungsform einer erfindungsgemäßen Schutzkappe abgedichteten Bereich des Bremszylinders einer Scheibenbremse,
- Figur 2: einen Querschnitt durch den mit einer weiteren Ausführungsform einer erfindungsgemäßen Schutzkappe abgedichteten Bereich des Bremszylinders einer Scheibenbremse,
- Figuren 3 bis 5: Teilansichten verschiedener Ausführungsformen von Versteifungsringen für eine Schutzkappe gemäß Figur 2 und
- Figur 6: einen Querschnitt durch das radial äußere Ende des Balgs einer weiteren Ausführungsform einer erfindungsgemäßen Schutzkappe.

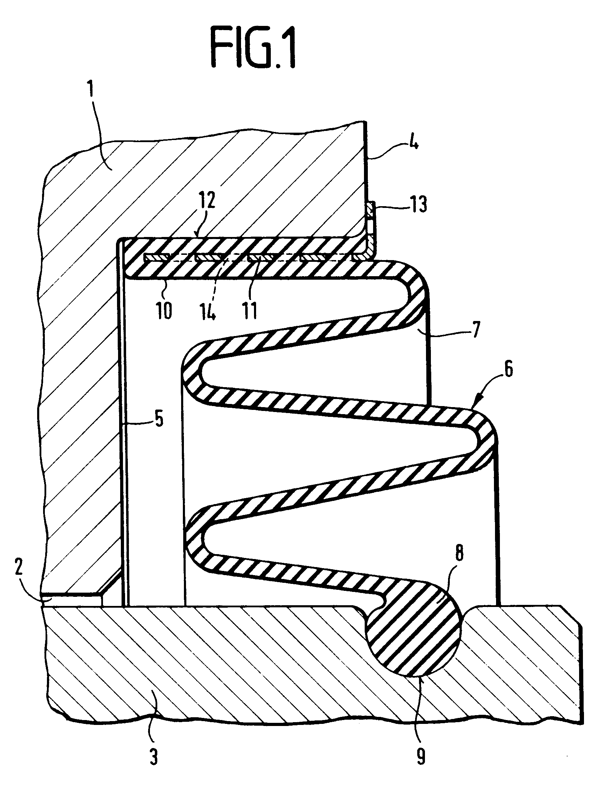

Die Schnittdarstellung gemäß Figur 1 zeigt das offene Ende eines Zylinders 1 einer Scheibenbremse mit einem aus der Zylinderbohrung 2 herausragenden Kolben 3. In der Stirnseite 4 des Bremszylinders 1 ist eine ringförmige Ausnehmung 5 vorgesehen, in der eine Schutzkappe 6 angeordnet ist. Die Schutzkappe 6 besteht aus einem den Kolben 3 ringförmig umgebenden, mehrfach gefalteten Balg 7, der an seinem radial inneren Ende mit einem Befestigungswulst 8 in eine Ringnut 9 im Kolben 3 eingeknöpft ist. Das radial äußere Ende 10 des Balgs 7 ist durch einen zylindrischen Ring 11 aus rostfreiem Stahlblech versteift und wird von dem Ring 11 mit seiner Außenfläche dicht gegen die zylindrische Innenwand 12 der Ausnehmung 5 gedrückt. Der Ring 11 ist in eine durch das Ende 10 des Balgs 7 gebildete, einseitig offene Tasche eingebettet und ragt mit einem radial nach außen abgebogenen Kragen 13 aus der Tasche hervor. Der Kragen 13 dient zum Ansetzen eines Montagewerkzeugs für das automatische Montieren des Endes 10 der Schutzkappe 6 und bildet einen mit der Stirnseite 4 des Bremszylinders 1 zusammenwirkenden Anschlag, durch den die Einschubtiefe des Endes 10 begrenzt wird.

Zur Verbindung des Rings 11 mit der durch das Ende 10 gebildeten Tasche wird der Ring 11 in eine Spritzform zur Herstellung des Balgs 7 eingelegt und mit dem elastomeren Balgmaterial umspritzt. Da hierbei eine ausreichende adhäsive Verbindung zwischen dem Ring 11 und dem Balgmaterial nicht immer erreicht wird, ist der Ring 11 mit Perforationen 14 in Form von kreisrunden Löchern versehen, in die das Balgmaterial beim Spritzvorgang eindringt, um dadurch eine formschlüssige Verbindung zwischen dem Ring 11 und dem Ende 10 hervorzurufen. Durch diese formschlüssige Verbindung werden die bei dem Einpressen des Endes 10 in die Ausnehmung 5 auftretenden Scherkräfte übertragen, so daß das Ende 10 über den Ring 11 in die dargestellte Einbaulage gedrückt werden kann, ohne daß die Gefahr einer Beschädigung der durch das Ende 10 gebildeten Tasche besteht. Die beschriebene Schutzkappe 6 läßt sich somit über den Ring 11 zuverlässig automatisch montieren und dabei dicht mit dem Bremszylinder 1 verbinden.

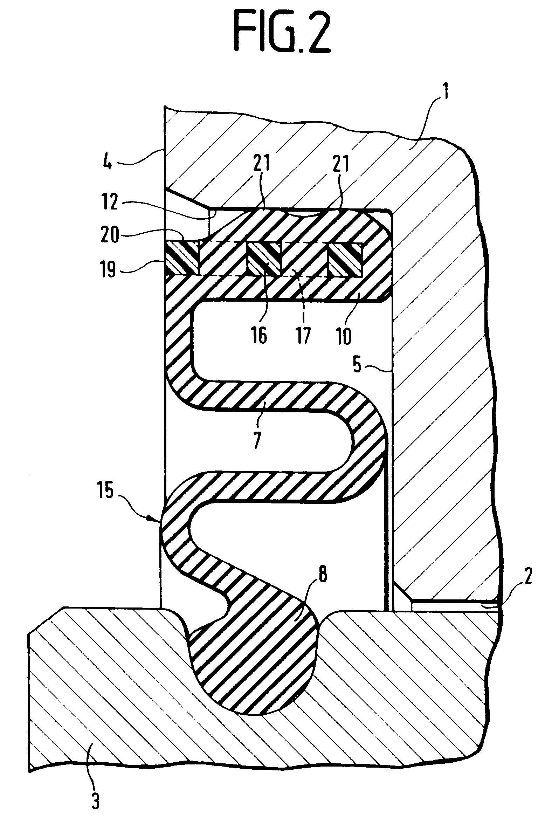

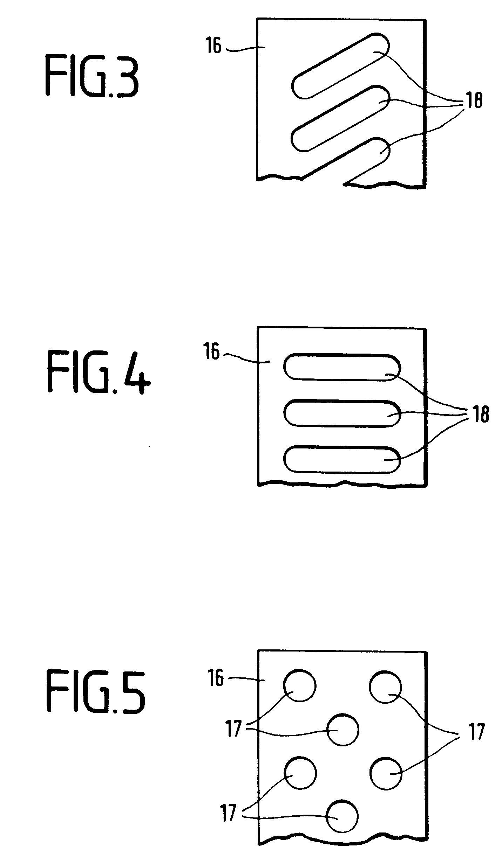

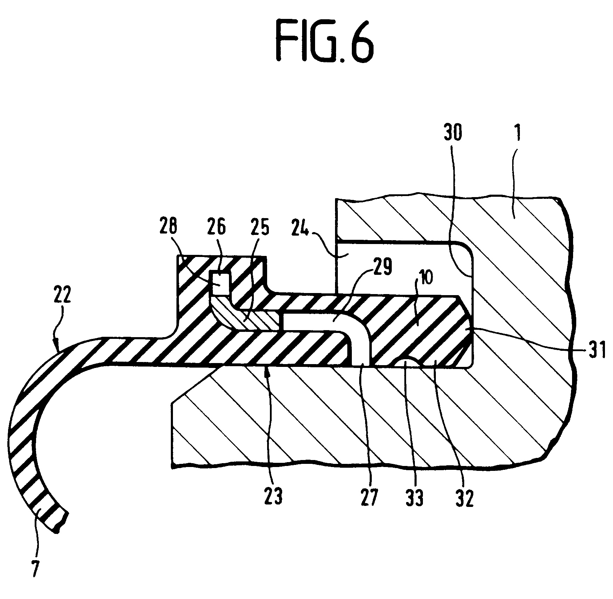

Bei der in Figur 2 dargestellten Ausführungsform einer Schutzkappe 15 ist das radial äußere Ende 10 des Balgs 7 mit einem aus einem thermoplastischen Kunststoff hergestellten Ring 16 versteift. Der Ring 16 weist Perforationen in Form von kreisrunden Öffnungen 17 auf, wie sie in Figur 5 dargestellt sind. Die Größe der Öffnungen 17 entspricht den Fließeigenschaften des Gummimaterials, aus dem der Balg 7 hergestellt ist. Anstelle der Öffnungen 17 kann der Ring 16 auch mit Schlitzen 18 entsprechend den in den Figuren 3 und 4 dargestellten Anordnungen versehen sein. Auch bei diesem Ausführungsbeispiel ist der Ring 16 mit dem Gummimaterial des Balgs 7 umspritzt. Lediglich die der Ausnehmung 5 abgewandte Stirnseite 19 und der daran angrenzende radial äußere Rand 20 des Rings 16 liegen frei und bilden dadurch eine Ansetzfläche für ein Montagewerkzeug, mit dem die Schutzkappe 15 automatisch in die Ausnehmung 5 eingesetzt werden kann. Die Einbautiefe wird hierbei durch Anlage des Montagewerkzeugs an der Stirnseite 4 des Bremszylinders 1 bestimmt. Um eine gute Abdichtung des Endes 10 der Schutzkappe 15 gegenüber der Innenwand 12 des Bremszylinders 1 ohne hohe radiale Verformungskräfte zu erzielen, ist der den Ring 16 von außen umgebende Abschnitt des Endes 10 mit zwei Dichtwulsten 21 versehen.

Figur 6 zeigt eine Ausführungsform einer Schutzkappe 22, bei der das als Tasche ausgebildete radial äußere Ende 10 des Balgs 7 von außen eine zylindrische Wand 23 einer durch eine axial eingestochene Nut gebildeten Ausnehmung 24 umgreift. Der in das Ende 10 eingebettete, zylindrische Ring 25 weist einen radial nach außen abgebogenen Rand 26 im Innern der Tasche und einen radial nach innen abgebogenen Rand 27 auf, der aus der Tasche hervorsteht. Beide Ränder 26, 27 sind durch Ausschnitte 28, 29 unterbrochen, die in Umfangsrichtung im Abstand voneinander angeordnet sind und in die das Balgmaterial bei der Herstellung des Balges ganz oder teilweise eindringt. Die Ausschnitte 29 im Rand 27 erstrecken sich bis in den zylindrischen Teil des Rings 25 und erhöhen dadurch die Elastizität des Randes 27 in radialer Richtung. Der Rand 27 kann daher beim Einsetzen des Endes 10 der Schutzkappe 22 in die Ausnehmung 24 radial aufgeweitet werden, so daß er in seiner Einbaulage die Wand 23 fest umspannt und die Schutzkappe 22 durch seinen Reibkontakt mit der Wand 23 sicher in der Ausnehmung 24 hält. Der Ring 25 besteht vorzugsweise aus einem elastischen Metall, so daß sich hohe Spann- und Haltekräfte erzielen lassen. Probleme hinsichtlich der Fertigungstoleranzen, wie sie bei einem Gummi-Metall-Sitz auftreten können, lassen sich somit durch einen direkten Metallkontakt zwischen dem Ring 25 und der Wand 23 des Bremszylinders 1 vermeiden.

Zwischen dem Ring 25 und dem Boden 30 der Ausnehmung 24 weist das Ende 10 des Balgs 7 eine am Boden 30 anliegende axiale Dichtlippe 31 und eine die Wand 23 umspannende radiale Dichtlippe 32 auf. Zwischen der Dichtlippe 32 und dem Rand 27 ist ein Hinterschnitt 33 vorgesehen, damit die Dichtlippe 32 beim axialen Montieren des Endes 10 ausweichen kann und nicht abgeschert wird. Beide Dichtlippen 31, 32 sind so angeordnet, daß die Abdichtung in Bereichen der Ausnehmung 24 erfolgt, in denen die Ausnehmung 24 durch das Einpressen des Rings 25 nicht beschädigt werden kann. Bei der Schutzkappe 22 befindet sich die Öffnung der den Ring 25 aufnehmenden Tasche auf der nach außen abgedichteten Innenseite des Balgs 7, so daß auch der Ring 25 gegenüber Einwirkungen von außen geschützt ist. Zum Ansetzen eines Montagewerkzeugs dient der durch den Rand 26 versteifte Bereich des Endes 10, wobei die Einpreßkraft über das Gummimaterial der Schutzkappe 22 auf den Ring 25 übertragen wird.

### Bezugszeichenliste:

- 1: Bremszylinder
- 2: Zylinderbohrung
- 3: Kolben
- 4: Stirnseite
- 5: Ausnehmung
- 6: Schutzkappe
- 7: Balg
- 8: Befestigungswulst
- 9: Ringnut
- 10: Ende
- 11: Ring
- 12: Innenwand
- 13: Kragen
- 14: Perforation
- 15: Schutzkappe
- 16: Ring
- 17: Öffnung
- 18: Schlitz
- 19: Stirnseite
- 20: Rand
- 21: Dichtwulst
- 22: Schutzkappe
- 23: Wand
- 24: Ausnehmung
- 25: Ring
- 26: Rand
- 27: Rand
- 28: Ausschnitt
- 29: Ausschnitt
- 30: Boden
- 31: Dichtlippe
- 32: Dichtlippe
- 33: Hinterschnitt

## Patentansprüche

1. Schutzkappe für den Bremszylinder einer Scheibenbremse mit einem ringförmigen Balg (7), einem in eine Ringnut (9) im Kolben (3) des Bremszylinders (1) eingreifenden Befestigungswulst (8) an einem ersten Ende des Balgs (7) und einem das zweite Ende (10) des Balgs (7) gegen die Wand (12) einer ringförmigen Ausnehmung (5) in der Stirnseite (4) des Bremszylinders (1) andrückenden Versteifungseinlage in Form eines Ringes (11,16,25), der zumindest teilweise von dem Material des Balgs (7) umgeben ist, wobei das zweite Ende (10) des Balgs (7) eine einseitig offene, ringförmige Tasche bildet, in die der Ring (11,16,25) eingelegt ist, und ein aus der Tasche hervorstehender Rand (13,19,20,27) des Rings (11,16,25) eine Anlagefläche aufweist, dadurch **gekennzeichnet,** daß der Ring (11,16,25) innerhalb der Tasche Perforationen (14,28,29) aufweist, die von dem Material des Balgs (7) durchdrungen sind.

2. Schutzkappe nach Anspruch 1, dadurch gekennzeichnet, daß der aus der Tasche hervorstehende Rand (27) des Rings (25) an der Wand (23) der Ausnehmung (24) im Bremszylinder (1) mit Vorspannung anliegt.

3. Schutzkappe nach Anspruch 2, dadurch gekennzeichnet, daß der Rand (27) des Rings (25) radial umgebogen und durch im Abstand voneinander angeordnete Ausschnitte (29) unterbrochen ist.

4. Schutzkappe nach einem der vorhergehenden Ansprüche, dadurch gekennzeichnet, daß der Ring (11, 25) aus rostfreiem Stahl besteht.

5. Schutzkappe nach einem der Ansprüche 1 bis 3, dadurch gekennzeichnet, daß der Ring (16) aus einem thermoplastischen Kunststoff besteht.

6. Schutzkappe nach einem der vorhergehenden Ansprüche, dadurch gekennzeichnet, daß der aus der Tasche hervorstehende Rand des Ringes (11) einen radialen Kragen (13) hat, der in axialer Richtung an eine Anschlagfläche (4) am Bremszylinder (1) andrückbar ist.

7. Schutzkappe nach einem der vorhergehenden Ansprüche, dadurch gekennzeichnet, daß die an der Wand (12, 23) der Ausnehmung (5, 24) des Bremszylinders (1) anliegende Außenfläche der ringförmigen Tasche einen Dichtwulst (21) oder eine Dichtlippe (31, 32) aufweist.

8. Verfahren zur Herstellung einer Schutzkappe nach einem der vorhergehenden Ansprüche, dadurch gekennzeichnet, daß der Ring (11, 16, 25) in einer Spritzform für die Ausformung des Balges (7) mit dem elastomeren Material umspritzt wird.

## Claims

1. A dust cover for the brake cylinder of a disc brake, including a ring-shaped boot (7), a fixing torus (8) at a first end of the boot (7) which engages an annular groove (9) in the piston (3) of the brake cylinder (1), and a stiffening lining in the shape of a ring (11, 16, 25) which is at least partly surrounded by the material of the boot (7) and urges a second end (10) of the boot (7) against the wall (12) of an annular recess (5), a unilaterally open, ring-shaped bag formed upon the second end (10) of the boot (7) for accepting the ring (11, 16, 25), and a rim (13, 19, 20, 27) of the ring (11, 16, 25) which projects from the bag including an abutment surface,
**characterized** in that the ring (11, 16, 25) is formed with perforations (14, 28, 29) within the bag which are penetrated by the material of the boot (7).

2. A dust cover as claimed in claim 1,
**characterized** in that the rim (27) of the ring (25) which projects from the bag abuts with prestress against the wall (23) of the recess (24) in the brake cylinder (1).

3. A dust cover as claimed in claim 2,
**characterized** in that the rim (27) of the ring (25) is bent radially and is interrupted by cutouts (29) which are spaced from one another.

4. A dust cover as claimed in any one of the preceding claims,
**characterized** in that the ring (11, 25) is made of stainless steel.

5. A dust cover as claimed in any one of the claims 1 to 3,
**characterized** in that the ring (16) is made of a thermoplastic synthetic resin.

6. A dust cover as claimed in any one of the preceding claims,
**characterized** in that the rim of the ring (11) projecting out of the bag has a radial collar (13) which can be urged in an axial direction against a stop surface (4) on the brake cylinder (1).

7. A dust cover as claimed in any one of the preceding claims,
**characterized** in that the outer surface of the ring-shaped bag which is in abutment against the wall (12, 23) of the recess (5, 24) of the brake cylinder (1) is furnished with a sealing bead (21) or a sealing lip (31, 32).

8. A process for the manufacture of a dust cover as claimed in any one of the preceding claims,
**characterized** in that the ring (11, 16, 25) is spray-coated with the elastomeric material in an injection mould for shaping the boot (7).

## Revendications

1. Capuchon de protection, pour le cylindre d'un frein à disque, comprenant un soufflet (7) de forme annulaire, un bourrelet de fixation (8), situé à une première extrémité du soufflet (7) et s'emboîtant dans une gorge annulaire (9) ménagée dans le piston (3) du cylindre de frein (1), et un insert de renfort qui se présente sous la forme d'une bague (11, 16, 25) et applique la seconde extrémité (10) du soufflet (7) en appui sur la paroi (12) d'une cavité annulaire (5) ménagée dans la face frontale (4) du cylindre de frein (1) et qui est entouré au moins en partie par la matière du soufflet (7), tandis que la seconde extrémité (10) du soufflet (7) forme un logement annulaire, ouvert d'un côté et dans lequel la bague (11, 16, 25) est placée, et qu'un bord (13, 19, 20, 27) de la bague (11, 16, 25) qui est situé hors du logement comporte une surface d'application, caractérisé en ce que la bague (11, 16, 25) comporte, à l'intérieur du logement, des parties perforées (14, 28, 29) qui sont traversées par la matière du soufflet (7).

2. Capuchon de protection selon la revendication 1, caractérisé en ce que le bord (27) de la bague (25) qui est situé hors du logement est appliqué sous précontrainte en appui sur la paroi (23) de la cavité (24) ménagée dans le cylindre de frein (1).

3. Capuchon de protection selon la revendication 2, caractérisé en ce que le bord (27) de la bague (25) est plié radialement et est interrompu par des parties découpées (29) disposées à distance l'une de l'autre.

4. Capuchon de protection selon l'une des revendications précédentes, caractérisé en ce que la bague (11, 25) est en acier inoxydable.

5. Capuchon de protection selon l'une des revendications 1 à 3, caractérisé en ce que la bague (16) est en matière thermoplastique.

6. Capuchon de protection selon l'une des revendications précédentes, caractérisé en ce que le bord de la bague (11) qui est situé hors du logement comporte un rebord radial (13) qui est agencé de façon à pouvoir être appliqué en direction axiale en appui sur une surface d'application (4) située sur le cylindre de frein (1).

7. Capuchon de protection selon l'une des revendications précédentes, caractérisé en ce que la surface extérieure du logement de forme annulaire qui est appliquée en appui sur la paroi (12, 23) de la cavité (5, 24) du cylindre de frein (1) comporte un bourrelet d'étanchéité (21) ou une lèvre d'étanchéité (31, 32).

8. Procédé de fabrication d'un capuchon de protection selon l'une des revendications précédentes, caractérisé en ce qu'on entoure, par injection et au moyen de la matière élastomère, la bague (11, 16, 25) placée dans un moule d'injection prévu pour le formage du soufflet (7).
